# EUROPEAN PATENT APPLICATION

(11) **EP 2 360 223 A1**
(43) Date of publication of application: **24.08.2011**
(21) Application number: 10250326.5
(22) Date of filing: 24.02.2010
(51) Int. Cl.: C09K 8/524, C09K 8/62, C09K 8/68

(54) **Breaker fluid**

(71) Applicant: BP Exploration Operating Company Limited, Sunbury on Thames, Middlesex TW16 7BP (GB)
(72) Inventor: The designation of the inventor has not yet been filed
(74) Representative: Collins, Frances Mary

(57) **Abstract**

A method of removing gelled water-soluble polysaccharide-based polymer residues from a well, the method comprising placing a breaker fluid in the well wherein the breaker fluid comprises a base fluid that is either
(a) a water-miscible or water-soluble organic liquid de-gelling agent selected from the group consisting of dimethylformamide (DMF); dimethylacetamide (DMAC); 1,3-dimethyl-3,4,5,6-tetrahydro-2(1H)-pyrimidinone (DMPU); 1 ,3-dimethyl-2-imidazolidinone (DMI); N-methylpyrrolidinone (NMP); butyrolactone; formamide; N-; N-methylformamide; dimethyl sulfoxide (DMSO); acetonitrile; propionitrile; sulfolane; N,N-dimethylpropionamide; tetramethylurea; hexamethylphosphoramide; ethylene glycol dimethyl ether; diethylene glycol dimethyl ether; 1,4 dioxane; tetrahydrofuran; N-methylmorpholine-N-oxide; trimethylamine N-oxide; and mixtures thereof; or
(b) a solution of at least one de-gelling agent in a liquid medium wherein the liquid medium is either aqueous or is a water-miscible or water-soluble organic liquid and the de-gelling agent is selected from the group consisting of:
(i) lithium chloride, lithium bromide; guanidinium chloride, and guanidinium bromide;
(ii) iodide salts of lithium, sodium, potassium, ammonium, magnesium, calcium and guanidinium;
(iii) nitrate salts of lithium, sodium, potassium, magnesium, calcium and guanidinium;
(iv) thiocyanate salts of lithium, sodium, potassium, ammonium, magnesium calcium and guanidinium;
(v) perchlorate salts of lithium, sodium, ammonium, magnesium, calcium and guanidinium;
(vi) salicylate salts of lithium, sodium, potassium, ammonium, magnesium, calcium and guanidinium;
(vii) trichloracetate and trifluoracetate salts of lithium, sodium, potassium, ammonium, magnesium, calcium and guanidinium;
(viii) urea, thiourea and methylacetamide, and
(ix) the water-miscible or water-soluble organic liquid de-gelling agents defined in (a), and the de-gelling agent(s) is present in the liquid medium in an amount of at least 10% by weight, preferably, at least 15% by weight, based on the total weight of the liquid medium and the de-gelling agent(s).

## Description

This invention relates to a breaker fluid effective for removing gelled water-soluble polysaccharide-based polymer residues from a filter cake that has deposited onto the wall of a wellbore and for removing gelled water-soluble polysaccharide-based polymer residues that have invaded the porous rock matrix surrounding a wellbore.

Water-soluble, polysaccharide-based viscosifying polymers and "Filtrate Loss Reducers" (FLRs) are commonly used in wellbore fluids such as drilling fluids, completion fluids, fracturing fluids, and work-over fluids that are used for drilling, completing, fracturing, and work-over of wells respectively, especially for wells that penetrate a porous and permeable hydrocarbon-bearing rock formation. However, during drilling (and sometimes during completion or work-over operations), a filter cake is formed on the walls of the wellbore across the interval of a hydrocarbon-bearing rock formation that the well is designed to access in order to produce hydrocarbons therefrom or to allow injection of fluids thereinto. This filter cake is laid down when the hydrostatic pressure in the wellbore exceeds the pressure in the formation. Solid particulate materials (such as calcium carbonate or magnesium carbonate particles) and colloidal materials (such as clays) that are suspended in the wellbore fluid are filtered out onto the walls of the wellbore as a filter-cake and filtrate enters the porous and permeable rock formation.

In addition to the solid particulate materials, the filter-cake typically also contains the water-soluble polysaccharide-based viscosifying polymers and FLRs. These polysaccharide-based polymers are retained within the filter-cake because of the very small size of the pores that form between the particulate and colloidal material, and also because of polymer adsorption onto the surfaces of the particulate and colloidal material. Accordingly, a concentrated polymer gel is formed within the filter-cake that controls the unwanted loss of fluids into the formation from the wellbore fluid and the undesirable growth in thickness of the filter-cake.

In addition to the plugging effects of the gelled polysaccharide-based polymer residues in filter-cakes, on occasions polysaccharide-based polymeric solutions invade the porous rock formation resulting in a plugging gel residue within the pores of the rock matrix, in the vicinity of the wellbore. Similar effects can occur during fracturing of a rock formation when polysaccharide-based polymers such as guar gum and its derivatives are used to viscosity the fracturing fluid. Fluid invasion (leak off from the fracturing fluid) into the porous and permeable rock formation leads to plugging gelled residues within the rock matrix whilst filtration of the fracturing fluid can result in a filter-cake comprising gelled polysaccharide-based polymer residues being deposited in the fractures. Polymer chain-scission agents such as enzymes or oxidising agents are generally incorporated into the fracturing fluid, but these do not always provided an efficient degradation of the gelled polysaccharide-based polymer residues.

The presence of the gelled water-soluble polysaccharide-based polymers in the filter-cake or in the pores of the rock matrix can result in a persistent barrier to fluid flow when the well is put onto production or onto injection thereby causing reduced hydrocarbon productivity (in production wells) or reduced injectivity of injection fluids (in injection wells). This barrier to flow can be difficult to remove, especially when a filter-cake is trapped between the formation face (the wellbore wall) and an expandable sand screen or a gravel pack that has been placed in the wellbore. The barrier effect is even more problematical for wells assigned to the injection of fluid (for example, water or gas) either for maintaining reservoir pressure or for enhancing hydrocarbon recovery from the hydrocarbon-bearing formation. This is because the injected fluid attempts to push the filter-cake into the rock formation, thereby augmenting the plugging effect of the polymer gel. In particular, the gel may be squeezed into the rock matrix by the injection fluid thereby forming a persistent blockage within the pores of the rock matrix.

Typically, a breaker fluid is pumped into the well during a completion operation (typically after having put in place the production or injection tubing and associated packers, valves and other completion equipment) or after a well repair during a work-over operation. A breaker fluid may also be pumped into natural fractures that are present in the wall of the wellbore or fractures that have been induced in the wall of the wellbore by the fracturing fluid, in order to remove plugging polymer residues that have invaded the rock matrix or that have been deposited in the fractures. By "breaker fluid" is meant a fluid specifically designed to dissolve, denature or remove deposits or residues from a wellbore where these deposits have arisen as a result of the use of a drilling, completion , fracturing, or work-over fluid in a wellbore operation.

Solid particulate materials such as calcium carbonate or magnesium carbonate particles that are deposited in a filter-cake can often be removed using a breaker fluid that comprises an acid, an acid precursor, or a chelating agent.

Breaker fluids often also include a variety of materials designed to break the viscosity of the gelled water-soluble polysaccharide-based polymers by a process of chain-scission. Enzymes such as cellulase (for cellulose derivatives) and amylase (for starch-based polymers) have been used, but their high molecular weight can inhibit their entry into the filter-cake and reduce the rate at which they react with the gelled water-soluble polysaccharide-based polymer residues. Oxidizing agents such as persulfates, chlorine-based bleach solutions and peroxides have also been used as polysaccharide based polymer chain-scission agents, but again the gel strength of the polymer residues hinders access of the oxidizing agent to the polymer chains. Although polysaccharide-based polymers such as hydroxyethyl cellulose are susceptible to acid hydrolysis by relatively strong acids such as hydrochloric acid, the rate of chain scission will increase if the gel strength of the polymer residues can be reduced.

Thus, residues comprised of gelled water-soluble polysaccharide-based polymers can be difficult to treat, and can exert a persistent plugging effect within a well. It has also been found that gelled water-soluble polysaccharide-based polymer residues can interfere with the dissolution of acid-soluble particulates such as calcium carbonate or magnesium carbonate particles owing to the particles being encapsulated in the gel.

Accordingly, there remains a need for improved breaker fluids for the removal of gelled water-soluble polysaccharide-based polymer residues.

An object of the present invention is to provide an improved method of treating gelled water-soluble polysaccharide-based polymer residues that are contained within a filter cake or within a rock matrix using a breaker fluid comprising one or more de-gelling agents that exert a destructuring (de-gelling) effect on the gelled polysaccharide-based polymer residues wherein the de-gelling agent(s) may be used either on its own or optionally in conjunction with one or more known polymer chain scission agents thereby increasing the effectiveness of the chain scission agent(s).

Thus, the present invention relates to a method of removing gelled water-soluble polysaccharide-based polymer residues from a well, the method comprising placing a breaker fluid in the well wherein the breaker fluid comprises a base fluid that is either
(A) a water-miscible or water-soluble organic liquid de-gelling agent selected from the group consisting of dimethylformamide (DMF); dimethylacetamide (DMAC); 1,3-dimethyl-3,4,5,6-tetrahydro-2(1H)-pyrimidinone (DMPU); 1,3-dimethyl-2-imidazolidinone (DMI); N-methylpyrrolidinone (NMP); butyrolactone; formamide; N-; N-methylformamide; dimethyl sulfoxide (DMSO); acetonitrile; propionitrile; sulfolane; N,N-dimethylpropionamide; tetramethylurea; hexamethylphosphoramide; ethylene glycol dimethyl ether; diethylene glycol dimethyl ether; 1,4 dioxane; tetrahydrofuran; N-methylmorpholine-N-oxide; trimethylamine N-oxide; and mixtures thereof; or
(B) a solution of at least one de-gelling agent in a liquid medium wherein the liquid medium is either aqueous or is a water-miscible or water-soluble organic liquid and the de-gelling agent is selected from the group consisting of:
   (i) lithium chloride, lithium bromide; guanidinium chloride, and guanidinium bromide;
   (ii) iodide salts of lithium, sodium, potassium, ammonium, magnesium, calcium and guanidinium;
   (iii) nitrate salts of lithium, sodium, potassium, magnesium, calcium and guanidinium;
   (iv) thiocyanate salts of lithium, sodium, potassium, ammonium, magnesium calcium and guanidinium;
   (v) perchlorate salts of lithium, sodium, ammonium, magnesium, calcium and guanidinium;
   (vi) salicylate salts of lithium, sodium, potassium, ammonium, magnesium, calcium and guanidinium;
   (vii) trichloracetate and trifluoracetate salts of lithium, sodium, potassium, ammonium, magnesium, calcium and guanidinium;
   (viii) urea, thiourea and methylacetamide, and
   (ix) the water-miscible or water-soluble organic liquid de-gelling agents defined in (A), and the de-gelling agent(s) is present in the liquid medium in an amount of at least 10% by weight based on the total weight of the liquid medium and the de-gelling agent(s).

Thus, where the de-gelling agent is a water-soluble or water-miscible organic liquid, the base fluid may be either the undiluted organic liquid or a solution of the organic liquid in a liquid medium. Where the de-gelling agent is a solid at ambient temperature (i.e. is a salts or compounds defined in (B)(i) to (B)(viii)), the base fluid is a solution of at least one of the solid de-gelling agents in a liquid medium. If desired, the base fluid may comprise a solution of at least one of the solid de-gelling agents in one or more of the organic liquid de-gelling agents defined in (A).

The term "placing a breaker fluid in a well" as used herein encompasses placing the breaker fluid in a wellbore or placing the breaker fluid in one or more fractures in the wall of a wellbore.

The term "breaker fluid" as used herein means a fluid specifically designed to dissolve, denature or remove water-soluble gelled polysaccharide-based residues from a well (including fractures in the wall of the wellbore) where the residues have arisen, for example, as a result of the use of a drilling, completion, fracturing or work-over fluid that contains water-soluble polysaccharide based polymeric additives such as viscosifying agents or Filtrate Loss Reducers (FLRs) in a well operation.

Where the base fluid is a solution of at least one de-gelling agent in an aqueous medium, the aqueous medium may be fresh water, seawater, brackish water or a synthetic brine. Where the base fluid is a solution of at least one de-gelling agent in an organic liquid medium, the organic liquid medium may be any organic solvent (either protic or aprotic organic solvents) in which the de-gelling agent has a solubility of at least 10% by weight. Suitably, the organic solvent is either miscible with water, or is soluble in water, preferably, to an extent of at least 10% by weight. Suitable aprotic organic solvents include but are not limited to the organic liquid de-gelling agents defined in (A). Suitable protic organic solvents include methanol and ethanol.

Typically, the gelled water-soluble polysaccharide-based polymers include bacterial gums, for example, xanthan, scleroglucan, diutan, welan, or succinoglycan gums; cellulose derivatives such as carboxymethyl cellulose (CMC) and hydroxyethyl cellulose (HEC); starch derivatives including pregelatinized starch, cross-linked starch, carboxymethyl starch and hydroxyalkyl starch derivatives; and guar gum and its derivatives such as hydroxypropyl guar and carboxymethyl guar.

The breaker fluid of the present invention is of particular use for removing gelled water-soluble polysaccharide deposits from hydrocarbon production wells, water production wells, or injection wells (that are used for either injecting fluids into a hydrocarbon reservoir for pressure maintenance or for enhanced hydrocarbon recovery therefrom or for injecting waste fluids streams, for example CO₂ into a formation for storage therein).

Generally, the gelled water-soluble polysaccharide-based polymer residues are contained within a filter cake that has deposited from a wellbore fluid onto the walls of a wellbore. For example, the filter cake may have deposited onto the walls of the wellbore proximate a hydrocarbon-bearing formation of a reservoir or proximate an underlying water-bearing formation. However, it is also envisaged that the gelled water-soluble polysaccharide based polymer residues may have invaded the porous and permeable hydrocarbon-bearing or water-bearing rock formation thereby causing formation damage by plugging the pores of the formation.

Typically, an effective amount of the breaker fluid is pumped into place (spotted) across the interval of the well (for example, proximate a hydrocarbon-bearing or water-bearing formation) that requires treatment to remove the gelled water-soluble polysaccharide-based polymer residues. Alternatively, an effective amount of the breaker fluid may be pumped into fractures that are present in the wall of the wellbore to remove the gelled water-soluble polysaccharide-based polymer residues. By effective amount of breaker fluid is meant an amount sufficient to fill the interval of the well proximate the formation, or where the polymer residues are contained within fractures, to at least fill the fracture(s) to be treated.

The location in the well that contains the gelled polymeric residues is left in contact with the breaker fluid for a sufficient period of time to de-gel the polysaccharide-based residues thereby forming a mobile aqueous polymeric phase. Preferably, the location in the well that contains the gelled polymeric residues is soaked with the breaker fluid for at least 4 hours, preferably, at least 12 hours, for example, 1 to 3 days. Optionally, the pressure applied to the breaker fluid is increased during the soaking period in order to force the breaker fluid into more intimate contact with the gelled polysaccharide-based residues. For example, the pressure applied to the breaker fluid may be increased by up to 150 bar (15 MPa), for example, 30 to 150 bar (3 to 15 MPa) over the soaking period.

For well treatments to remove gelled polysaccharide-based polymers that have invaded the formation, the volume of breaker fluid that is introduced to the well is at least equal to the wellbore volume for the interval of the well that is to be treated plus an allowance for some leak off into the formation. A breaker fluid volume of between 120 and 200% of the volume of the interval of the wellbore is normally used.

After the de-gelling agent has reacted with the polysaccharide-based residues, the well is then brought onto production or injection using well-known methods. For example, the mobile aqueous polymeric phase may simply disperse in the breaker fluid which is then pumped out of the well before bringing the well onto production or injection. However, if desired an aqueous wash fluid may be circulated in the well in order to assist in removing the polysaccharide-based residues. An aqueous wash fluid is of particular benefit when the gelled polysaccharide-based residues are contained in a filter-cake that has deposited on the walls of the wellbore.

Without wishing to be bound by any theory, it is believed that the effect of the de-gelling agent on the gelled polysaccharide-based polymer residues is due to a combination of: interference with the water-of-hydration that is associated with the gelled water-soluble polysaccharide-based polymer; formation of polymer/de-gelling agent complexes; and the breaking of physical polymer-polymer interactions (intermolecular forces between polymer chains). It is believed that the de-gelling agent, by itself, is not effective in degrading the polymer chains.

Preferably, the base fluid comprises a solution of at least one de-gelling agent in a liquid medium wherein the de-gelling agent is selected from the group consisting of: lithium chloride, lithium bromide, guanidinium chloride, guanidinium bromide; iodide salts of lithium, sodium, potassium, ammonium, magnesium, calcium and guanidinium;
nitrate salts of lithium, sodium, potassium, magnesium, calcium and guanidinium; thiocyanate salts of lithium, sodium, potassium, ammonium, magnesium calcium and guanidinium;
perchlorate salts of lithium, sodium, ammonium, magnesium, calcium and guanidinium; urea and thiourea;
N-methylpyrrolidinone (NMP); 1 ,3-dimethyl-2-imidazolidinone (DMI); butyrolactone; dimethyl sulfoxide (DMSO); N-methylmorpholine-N-oxide; and trimethylamine N-oxide. However, if desired, the preferred organic liquid de-gelling agents may be used undiluted.

In particular, the base fluid comprises a solution of least one de-gelling agent in a liquid medium wherein the de-gelling agent is selected from the group consisting of: guanidinium chloride, guanidinium bromide;
iodide salts of lithium, sodium, potassium, ammonium, magnesium, calcium and guanidinium;
nitrate salts of lithium, magnesium and guanidinium;
thiocyanate salts of lithium, sodium, potassium, ammonium, magnesium calcium and guanidinium; and
urea and thiourea.

Most preferably, the breaker fluid comprises an aqueous solution of at least one de-gelling agent selected from the group consisting of urea, lithium thiocyanate and guanidinium thiocyanate.

It has also been found that in order to impart a useful de-gelling effect on gelled water-soluble polysaccharide-based polymers, the de-gelling agent(s) should be present in the liquid medium of the base fluid at a concentration of at least 10% by weight (based on the total weight of the liquid medium and de-gelling agent). Preferably, the de-gelling agent is present in the liquid medium at a concentration of at least 15% by weight, and most preferably at least 20% by weight. Where the de-gelling agent is dissolved in the liquid medium, the upper limit for the concentration of a particular de-gelling agent is either the limit of its solubility in the liquid medium (aqueous medium or organic solvent) or is imposed by a density limit for a wellbore fluid for use a particular well. Where the de-gelling agent is a water-miscible organic liquid, there is no upper limit for its concentration in water as it can be mixed with water in all proportions. As discussed above, the breaker fluid may also comprise undiluted (neat) organic liquid de-gelling agent (i.e. with no added water or no added organic solvent).

Whilst the reduction in gel strength exerted by the de-gelling agent alone can be considerable, optionally, a polymer-degrading (chain-scission) agent may be incorporated into the breaker fluid. Advantageously, it has been found that the strong de-gelling effect of the de-gelling agents renders the polymeric residues much more readily breakable by the polymer-chain-scission agent. Without wishing to be bound by any theory, it is believed that the de-gelling agents of the breaker fluid effect a change in conformation of the polysaccharide chains thereby promoting access to and mixing of the polymer-chain-scission agent with the polysaccharide-based polymers. Accordingly, the breaker fluid of the present invention preferably additionally comprises one or more polymer-chain-scission agents.

The chain-scission agent should be soluble or dispersible in the base fluid of the breaker fluid.

Suitable polymer-chain scission agents include enzymes, oxidizing agents, and acids, the choice depending on the type of gelled water-soluble polysaccharide-based polymer residue and on the downhole temperature. Generally, enzymes and oxidizing agents act by degrading the polysaccharide-based polymers while acids achieve hydrolytic cleavage of the polymer chains.

Examples of suitable enzymes which may be used as polymer-chain scission agents include enzymes which can hydrolyse starch, xanthan, cellulose, guar, scleroglucan, succinoglycan or derivatives of these polysaccharide-based polymers. It is advantageous for the enzymes to be readily water soluble although the enzymes may also be used in the form of a dispersion. Preferred enzyme concentrations are in the range of 0.05 to 5% by weight for commercial liquid enzyme preparations or 0.005 to 0.5% by weight for dried enzymes (based on the total weight of the breaker fluid).

Cellulase enzymes can be effective polymer-chain scission agents for cellulose-based polymers, and amylase for starch-based polymers. Enzymes are generally more effective at lower well temperatures such as temperatures of up to 70°C, as higher temperatures tend to degrade most enzymes.

Examples of oxidising agents that may be used as polymer-chain scission agents include peroxides (in particular, hydrogen peroxide, calcium peroxide, and urea peroxide), peracetic acid and its salts, persulfates (ammonium persulfate, sodium persulfate or potassium persulfate), perborates (in particular, sodium perborate), percarbonates (in particular, sodium percarbonate), perphosphates, hypochlorites (in particular, sodium hypochlorite), and persilicates.

Oxidizing agents are usually more effective at temperatures higher than 70°C. However, urea peroxide is effective at lower temperatures, such as 60°C. Suitably, a catalyst such as tetra acetyl ethylene diamine (TAED) may be added to the breaker fluid in order to accelerate the action of oxidizing agents at lower temperatures. Typically, oxidising agents are added to the breaker fluid in an amount of at least 1% by weight (based on the total weight of the breaker fluid).

As discussed above, the gelled water-soluble polysaccharide-based polymer residues may be present within a filter-cake that has deposited onto the walls of the well from a wellbore fluid, for example, a drilling, completion, or work-over fluid. In addition to polysaccharide polymers, the filter cake may contain acid soluble particles such as calcium carbonate or magnesium carbonate particles that were added to the drilling, completion or work-over fluid as bridging solids or as density-increasing agents. In order to dissolve these particles, it is preferred to add a strong or weak acid to the base fluid. Suitable acids include mineral acids such as hydrochloric acid, and sulfamic acid, or organic acids, generally aliphatic carboxylic acids having from 1 to 6 carbon atoms, for example, formic acid, acetic acid and lactic acid (hydroxyacetic acid). Formic acid is a stronger acid than acetic acid and is often preferred. The concentration of acid in the breaker fluid is typically at least 5% by weight (based on the total weight of the breaker fluid).

Acid-generating substances (acid precursors) such as esters or orthoformates that hydrolyze to produce acids may be added to the breaker fluid in order to achieve a more controlled, gradual treatment of the filter-cake, thereby effecting a more complete dissolution of the acid soluble particles over the entire interval proximate the hydrocarbon-bearing formation. Thus, too rapid a reaction can result in removal of substantially all of the soluble particles in a portion of the filter cake resulting in the breaker fluid being lost to the formation and only a portion of the filter-cake being treated. Suitable esters for use as acid precursors include carboxylic acid esters, in particular esters of a carboxylic acid having from 1 to 6 carbon atoms and an alcohol or polyol. Typical esters include esters of carboxylic acid selected from formic acid, acetic acid and lactic acid and an alcohol or polyol selected from methanol, ethanol, isopropanol, glycerol (1,2,3-propane triol), ethylene glycol, diethylene glycol, or triethylene glycol. Preferred esters include methyl acetate, methyl formate, ethyl acetate, ethyl formate, glyceryl triacetate, methyl lactate, glyceryl diacetate, ethylene glycol diacetate, diethylene glycol diacetate or triethylene glycol diacetate. Cyclic esters may also be used such as lactones, in particular, β-propiolactone. Preferred orthoformates include triethylorthoformate, HC(OC₂H₅)₃, and triisopropylorthoformate, HC[OCH(CH₃)₂]₃. The ester or orthoformate should be at least slightly soluble in water. Preferably, the ester or orthoformate should have a solubility in water of at least 1% by weight, most preferably, at least 5% by weight.

In general, where the temperature in the well temperatures is below 120°C, it is preferred to incorporate an enzyme into the treatment fluid that accelerates the rate of hydrolysis of the ester. Lipases, esterases and proteases are the preferred enzymes for increasing the rate of ester hydrolysis. The concentration of such enzymes in the breaker fluid is typically 0.05 to 5% by weight for commercial liquid enzyme preparations and 0.005 to 0.5% by weight for dried enzyme preparations (based on the total weight of the breaker fluid).

At temperatures at or above 120°C, thermal hydrolysis of the ester may proceed at a sufficient rate that there is no requirement for the addition of an ester hydrolysing enzyme or enzymes to the breaker fluid.

In order to obtain sufficient dissolution of acid soluble particles, it is preferred than the breaker fluid has a concentration of acid precursor of at least 1% by weight, in particular, at least 5 % by weight, for example, a concentration in the range of 5 to 20% by weight (based on the total weight of the breaker fluid).

It is observed that an advantage of incorporating an acid or acid precursor into the breaker fluid of the present invention is that the acid has at least two functions: it acts by dissolving any acid-soluble particulates that are present in a filter cake that contains the gelled polysaccharide-based polymer and also as a chain-scission agent. In addition, where one or more enzymes useful as chain-scission agents are incorporated in the breaker fluid, the enzymes generally have an optimal pH in the range of pH 3 to 7. Such enzymes will therefore have their activity enhanced by the generation of moderately acidic conditions arising from addition of an acid or acid precursor to the breaker fluid.

It may be beneficial to add to the breaker fluid chelating agents (also referred to in the art as sequestrants) such as malonic acid, oxalic acid, succinic acid, ethylenediaminetetraacetic acid (EDTA), nitrolotriacetic acid (NTA), citric acid, hydroxyacetic acid, and salts or partial salts thereof. However, the efficiency of such chelating agents or sequestrants would be reduced where the base fluid of the breaker fluid comprises a solution of a de-gelling agent that is a calcium or magnesium salt. Typically, a sequestrant is added to the breaker fluid in an amount of at least 5 % by weight (based on the total weight of the breaker fluid).

Other additives that may be added to the breaker fluid of the present invention include density-increasing mineral powders such as barite; surfactants, solvents; defoamers, corrosion inhibitors, scale inhibitors, hydrate inhibitors, demulsifiers, water-soluble polymers, pH control additives, and diverting agents. Also, where the base fluid is a solution of a de-gelling agent in an aqueous medium, the aqueous medium may comprise density-increasing water-soluble salts (for example, may be a synthetic brine).

It is also envisaged that an improvement in polymer residue clean-up may be achieved by incorporating a de-gelling agent within an aqueous based drilling, completion, work-over, or fracturing fluid.

Thus, in a further embodiment of the present invention there is provided a method of removing gelled water-soluble, polysaccharide-based polymer residues from a well, the method comprising:
(A) drilling, completing, or working-over the well or fracturing a rock formation that is penetrated by the well using an aqueous based wellbore fluid comprising at least one polysaccharide-based water-soluble polymer and at least one de-gelling agent as defined above wherein the de-gelling agent is present in the wellbore fluid in an amount of at least 5% by weight (based on the total weight of water and of de-gelling agent in the wellbore fluid) and wherein gelled polysaccharide-based polymer residues deposit in the well; and
(B) placing the breaker fluid defined above in the well for a sufficient period of time to de-gel the gelled polysaccharide-based polymer residues whilst optionally increasing the pressure applied to the breaker fluid by up to 150 bar (2175 psi).

As discussed above, the term "placing a breaker fluid" in a well encompasses placing the breaker fluid in a wellbore or placing the breaker fluid in one or more fractures in the wall of a wellbore.

Where step (A) comprises drilling, completing or working-over the well, the breaker fluid together with at least a portion of the de-gelled polymer residues may be removed from the well in a further step (C). Subsequently, hydrocarbons are either produced from the well or an injection fluid is injected into the well in yet a further step (D). However, it is envisaged that step (C) may be omitted such that the well is placed directly onto either production or injection of fluid such that the de-gelled polymers are either produced from the well with the produced fluid or are flushed into the formation with the injected fluid. Where step (C) is omitted, it is preferred that the breaker fluid comprises one or more polymer-chain-scission agents.

Where step (A) comprises fracturing a rock formation that is penetrated by the well, step (B) comprises placing the breaker fluid in the fracture(s) in the wall of the wellbore. Where the breaker fluid is placed in fracture(s) in the wall of the wellbore, step (C) may be omitted and the well may then be placed either onto production of hydrocarbons or onto fluid injection by proceeding directly to step (D). Again, it is preferred that the breaker fluid comprises one or more polymer-chain-scission agents.

Typically, the aqueous based wellbore fluid has been used during drilling, completing, or working-over a hydrocarbon production well or an injection well that is used to inject fluids into a hydrocarbon reservoir for either pressure maintenance or for enhanced recovery of hydrocarbons from the reservoir. Accordingly, the gelled polysaccharide residues may deposit in an interval of a production well proximate a hydrocarbon-bearing formation or in an interval of an injection well proximate a hydrocarbon-bearing formation and/or a formation into which it is intended to inject a fluid, for example, an underlying water-bearing formation. Typically, in step (B), the breaker fluid is placed across the interval of a production well proximate the hydrocarbon-bearing formation or across the interval of an injection well proximate the hydrocarbon-bearing formation and/or the underlying formation. In step (D), hydrocarbons are produced from the hydrocarbon-bearing formation into a production well or an injection fluid is injected from an injection well into the hydrocarbon formation and/or the underlying formation. Where the injection fluid is injected into an underlying formation, it is essential that the formation is not hydraulically isolated from the overlying hydrocarbon-bearing formation.

Addition of the de-gelling agent to the aqueous based wellbore fluid (drilling, completion, work-over or fracturing fluid) interferes with gelation of the water-soluble polysaccharide-based polymer residues, thereby aiding de-gellation of the gelled polysaccharide-based polymer residues by the breaker fluid.

In the case of a drilling, completion or work-over fluid, it is believed that at least a portion of the de-gelled polymer residues disperse in the breaker fluid and are therefore removable from the well together with the breaker fluid in optional Step (C). However, if desired, an aqueous wash fluid may be circulated within the well to displace the breaker fluid and to remove any residual de-gelled polymer residues prior to either producing hydrocarbons from the well or injecting an injection into the well in Step (D). An advantage of circulating an aqueous based wash fluid in the well prior to Step (D) is that this will assist in removing any filter-cake that has deposited on the walls of the wellbore in Step (A).

In a further embodiment of the present invention, there is provided a breaker fluid comprising:
(1) a base fluid that is either:
   (A) a water-miscible or water-soluble organic liquid de-gelling agent selected from the group consisting of dimethylformamide (DMF); dimethylacetamide (DMAC); 1,3-dimethyl-3,4,5,6-tetrahydro-2(1H)-pyrimidinone (DMPU); 1 ,3-dimethyl-2-imidazolidinone (DMI); N-methylpyrrolidinone (NMP); butyrolactone; formamide; N-; N-methylformamide; dimethyl sulfoxide (DMSO); acetonitrile; propionitrile; sulfolane; N,N-dimethylpropionamide; tetramethylurea; hexamethylphosphoramide; ethylene glycol dimethyl ether; diethylene glycol dimethyl ether; 1,4 dioxane; tetrahydrofuran; N-methylmorpholine-N-oxide; trimethylamine N-oxide; and mixtures thereof; or
   (B) a solution of at least one de-gelling agent in a liquid medium wherein the liquid medium is either aqueous or is a water-miscible or water-soluble organic liquid and the de-gelling agent is selected from the group consisting of:
      (i) lithium chloride, lithium bromide; guanidinium chloride, and guanidinium bromide;
      (ii) iodide salts of lithium, sodium, potassium, ammonium, magnesium, calcium and guanidinium;
      (iii) nitrate salts of lithium, sodium, potassium, magnesium, calcium and guanidinium;
      (iv) thiocyanate salts of lithium, sodium, potassium, ammonium, magnesium calcium and guanidinium;
      (v) perchlorate salts of lithium, sodium, ammonium, magnesium, calcium and guanidinium;
      (vi) salicylate salts of lithium, sodium, potassium, ammonium, magnesium, calcium and guanidinium;
      (vii) trichloracetate and trifluoracetate salts of lithium, sodium, potassium, ammonium, magnesium, calcium and guanidinium;
      (viii) urea, thiourea and methylacetamide, and
      (ix) the water-miscible or water-soluble organic liquid de-gelling agents defined in (A), and the de-gelling agent(s) is present in the liquid medium in an amount of at least 10% by weight based on the total weight of the liquid medium and the de-gelling agent(s); and
(2) at least one polymer-chain-scission agent.

Suitable polymer-chain-scission agents for use in the breaker fluid of the present invention are as described above.

As discussed above, other additives may be incorporated into the breaker fluid.

The present invention will now be illustrated with respect to the following and Examples and Figure.

### Examples

### Example 1

### Effect of de-gelling agents on the low-shear rate viscosity of a xanthan gum solution

Xanthan Gum (Barazan™ ex Halliburton Energy Services) was dissolved in deionised water at a dose of 2.5 lbs per barrel (7.14 g/l). The viscosity of the solution was measured at 6 rpm (10.22 reciprocal seconds) using a Fann 35 rheometer fitted with a heating cup. The viscosity at this low shear rate is a good indicator of the gel strengths under static conditions. The temperature of the test was varied over the range 80°F to 160°F (26.7°C to 71.1°C). Similar tests were performed where the aqueous phase also contained 30% by weight of four different de-gelling agents: urea, N-methyl pyrrolidone (NMP); magnesium nitrate, and guanidinium thiocyanate (GUT). The results of these tests are presented in Table 1 below.

**Table 1 - Viscosity results in centiPoise.**

| Compound | | | none | Urea | NMP | Mg(NO₃)₂ | GUT |
|---|---|---|---|---|---|---|---|
| °F | / | °C | (deionised water) | 30% by wt | 30% by wt | 30% by wt | 30% by wt |
| 80 | / | 26.7 | 750 | 450 | 500 | 400 | 375 |
| 100 | / | 37.8 | 700 | 400 | 425 | 350 | 350 |
| 120 | / | 48.9 | 600 | 250 | 375 | 300 | 300 |
| 140 | / | 60 | 500 | 150 | 300 | 250 | 250 |
| 160 | / | 71.1 | 425 | 50 | 225 | 200 | 250 |

The same test was then performed using urea at two different concentrations: 20% by weight and 40% by weight. The results of these further tests are presented in Table 2 below.

**Table 2 ― Viscosity results in centiPoise**

| Compound | | | Urea | Urea |
|---|---|---|---|---|
| °F | / | °C | 20% by wt | 40% by wt |
| 80 | / | 26.7 | 500 | 375 |
| 100 | / | 37.8 | 475 | 225 |
| 120 | / | 48.9 | 400 | 175 |
| 140 | / | 60 | 325 | 100 |
| 160 | / | 71.1 | 150 | <50 |

For the 40% urea solution the 10 second and 10 minute gel strengths of the solution were also measured at 160°F (71.1°C) / 3rpm. Both gel strengths were less than 1 lb/100 ft² showing that the gel strength of the xanthan gum solution had been essentially destroyed at this temperature by the urea de-gelling agent.

The results presented in Tables 1 and 2 clearly show that the de-gelling agents reduce the low shear rate viscosity of xanthan gum solutions at temperatures in the range 140-160°F (60 ― 71.1 °F). In particular, urea was found to be very effective as a de-gelling agent with the viscosity reducing effect increasing with urea concentration.

### Example 2.

### Effects of de-gelling agents on the viscosity at varying temperatures of a solution of Rheozan™ Luccinoalycan gum).

A stock solution (1,400 ml quantity) was prepared by mixing 10g of Rheozan™ and deionised water at high shear rate using a Silverson L4R mixer. The concentration was 2.5 lbs of Rheozan™ per barrel (7.14 g/l). The stock solution was refrigerated at a temperature of about 4°C in between testing aliquots in order to avoid bacterial spoilage.

To 140g of Rheozan™ stock solution was added 35g of the de-gelling additive under test to give an effective concentration of the additive of 20% by weight. All additives dissolved easily. The mixture was placed in a Fann 35 thermocup heater at room temperature and the rotor of the Fann 35 rheometer was placed in the liquid. A thermometer was arranged in the liquid. After turning on the thermocup heater, the viscosity of the solution (as measured at 6 rpm rotor speed) was monitored versus increasing temperature up to a maximum of about 160°F (71°C). The candidate de-gelling agents used were:
dimethyl sulfoxide (DMSO); 1,3 - dimethyl - 2 - imidazolidinone (DMI); urea;
guanidinium thiocyanate (GUT); guanidinium chloride (GUC); lithium bromide (LiBr);
lithium thiocyanate (LiT); and lithium perchlorate (LiP).
Similarly, urea was tested by adding 90g urea to 140g of Rheozan™ stock solution giving an effective urea concentration of 39.1% by weight. Lithium bromide was also tested at a concentration of 39.1% by weight.

Similarly, guanidinium thiocyanate was tested by adding 15.6g of GUT to 140g of Rheozan™ stock solution giving an effective GUT concentration of about 10% by weight.

For comparison, two non-de-gelling additives that are frequently used to increase the density of breaker fluids were tested at 20% by weight concentration. These were sodium chloride (NaCl) and sodium formate (NaFmt).

Also for comparison, the viscosity versus temperature of the Rheozan™ stock solution containing no additive ("none" in Table 3) was measured.

The results are shown in Table 3 below.

**Table 3 Fann 35 Rheometer - 6 rpm Dial Reading versus Temperature. Rheozan™ Solution plus various dissolved Additives**

| Additive | | DMS O | DMI | GUT | GUT | LiBr | LiBr | Urea | Urea | NaCl | Na Fmt | None |
|---|---|---|---|---|---|---|---|---|---|---|---|---|
| Concentration % by weight | | 20 | 20 | 10 | 20 | 20 | 39.1 | 20 | 39.1 | 20 | 20 | - - |
| Temperature | | | | | | | | | | | | |
| °F | °C | | | | | | | | | | | |
| 60 | 15.5 | 19 | 20 | 26 | 21 | 25 | 19 | 19 | 15 | 27 | 27 | 21 |
| 70 | 21.1 | 19 | 19 | 25 | 21 | 25 | 19 | 20 | 15 | 26 | 26 | 20 |
| 80 | 26.7 | 19 | 19 | 25 | 20 | 25 | 19 | 21 | 12 | 26 | 26 | 20 |
| 90 | 32.2 | 19 | 20 | 25 | 6 | 25 | 19 | 21 | 9 | 26 | 25 | 21 |
| 100 | 37.8 | 20 | 21 | 25 | 4 | 24 | 18 | 20 | 6 | 25 | 25 | 21 |
| 110 | 43.3 | 20 | 21 | 25 | 4 | 24 | 18 | 15 | 5 | 25 | 25 | 22 |
| 120 | 48.9 | 20 | 19 | 17 | 3 | 23 | 3 | 9 | 4 | 25 | 24 | 23 |
| 130 | 54.4 | 18 | 9 | 4 | 3 | 23 | 2 | 6 | 3 | 25 | 24 | 23 |
| 140 | 60.0 | 11 | 5 | 3 | 3 | 23 | 2 | 5 | 3 | 25 | 24 | 10 |
| 150 | 65.6 | 4 | 4 | 3 | 2 | 3 | 2 | 5 | 2 | 25 | 24 | 9 |
| 160 | 71.1 | 3 | 3 | 3 | 2 | 2 | 1 | 5 | 2 | 24 | 24 | 8 |

The results presented in Table 3 show that the Rheozan™ stock solution alone ("None") exhibits a transition temperature in the region of 140°F (60°C) where the viscosity drops rapidly with increasing temperature. The non-de-gelling additives sodium chloride and sodium formate clearly have a structuring effect on the succinoglycan polymer, maintaining a high low-shear-rate viscosity across the whole of the tested temperature range.

DMI was the more effective of the two liquids tested, providing much reduced solution viscosity at temperatures above about 120-130°F (about 50°C). Guanidinium thiocyanate (at 20% concentration) reduced the viscosity greatly at all test temperatures above 80°F, and was quite effective even at 10% concentration where a transition temperature of about 120°F was observed. Lithium bromide although less effective, provided a large drop in transition temperature to about 120°F / 49°C) when used at the higher dose of 39.1% by weight.

Although less effective on a pound for pound basis than guanidinium thiocyanate, urea used at 39.1 % produces a large drop in transition temperature to about 90°F (∼32°C). Urea is an attractive option as a de-gelling agent because of its low cost and low environmental impact.

### Example 3.

### Effects of de-gelling agents on the viscosity at varying temperatures of a solution of FL 7+™ (starch derivative ex TBC - Brinadd).

A quantity (1,500 g) of a solution of 187.5g of FL7+™ starch derivative in 1312.5g of deionised water was mixed at high shear rate using a Silverson L4R mixer. The concentration of FL7+™ was 12.5 % by weight. This concentration was intended to represent the higher concentration of fluid loss reducer that accumulates in a filter-cake. The stock solution was refrigerated at a temperature of about 4°C in between testing aliquots in order to avoid bacterial spoilage.

To 140g of the FL 7+™ stock solution was added 35g of the de-gelling additive under test to give an effective concentration of the additive of 20% by weight. All the additives mixed or dissolved easily. The mixture was placed in a Fann 35 thermocup heater at room temperature and the rotor of the Fann 35 rheometer was placed in the liquid. A thermometer was arranged in the liquid. After turning on the thermocup heater, the viscosity of the solution (as measured at 6 rpm rotor speed) was monitored versus increasing temperature up to a maximum of about 160°F (71 °C). The candidate de-gelling agents used were:
dimethyl sulfoxide (DMSO); N-methyl-2-pyrrolidone (NMP); 1,3 - dimethyl - 2 - imidazolidinone (DMI); urea; guanidinium thiocyanate (GUT); guanidinium chloride (GUC); lithium bromide (LiBr); lithium thiocyanate (LiT); and lithium perchlorate (LiP).
Similary, urea was similarly tested at an increased dose by adding 90g of urea to 140g of FL7+™ stock solution giving an effective urea concentration of 39.1 % by weight.
Guanidinium thiocyanate was similarly tested at a reduced dose by adding 15.6g of GUT to 140g of FL7+™ stock solution giving an effective GUT concentration of about 10% by weight. A 50/50 (by weight) mixture of urea and lithium bromide was also tested at a total concentration of 39.1% by weight.

For comparison, two non-de-gelling additives that are frequently used to increase the density of breaker fluids were similarly tested at 20% by weight concentration. These were sodium chloride (NaCl) and sodium formate (NaFmt).

The results are shown in Table 4.

**Table 4 Fann 35 Rheometer ― 6 rpm Dial Reading versus Temperature. 12.5% w/w FL7+™ Solution plus various dissolved Additives**

| **Additive** | | **DMSO** | **NMP** | **DMI** | **GUT** | **GUC** | **NaCl** | **Na Fmt** | **none** |
|---|---|---|---|---|---|---|---|---|---|
| **Concentration % by weight** | | **20** | **20** | **20** | **20** | **20** | **20** | **20** | **- -** |
| **Temperature** | | | | | | | | | |
| **°F** | **°C** | | | | | | | | |
| 60 | 15.5 | 118 | 80 | 68 | 135 | >300 | >300 | >300 | >300 |
| 70 | 21.1 | 95 | 82 | 68 | 124 | 298 | >300 | >300 | >300 |
| 80 | 26.7 | 85 | 84 | 67 | 115 | 260 | >300 | 277 | 275 |
| 90 | 32.2 | 80 | 86 | 67 | 108 | 233 | >300 | 270 | 247 |
| 100 | 37.8 | 77 | 91 | 66 | 103 | 195 | >300 | 255 | 223 |
| 110 | 43.3 | 76 | 101 | 66 | 98 | 195 | 280 | 219 | 196 |
| 120 | 48.9 | 75 | 100 | 66 | 91 | 198 | 245 | 173 | 185 |
| 130 | 54.4 | 74 | 101 | 66 | 87 | 179 | 234 | 149 | 164 |
| 140 | 60.0 | 73 | 73 | 66 | 83 | 172 | 200 | 140 | 149 |
| 150 | 65.6 | 70 | 85 | 63 | 79 | 157 | 176 | 126 | 133 |
| 160 | 71.1 | 60 | 85 | 47 | 75 | 126 | 154 | 120 | 124 |

Although the effects are less pronounced than with Rheozan™, the neat FL7+™ solution ("none") and the FL7+™ solutions containing sodium chloride and sodium formate maintained a high viscosity across the temperature range tested. DMI had a remarkable thinning effect, especially at the lower temperatures tested. Both NMP and DMI were notable in that the viscosity of the mixtures was approximately constant over most of the temperature range.

**Table 4 Continued. Fann 35 Rheometer ― 6 rpm Dial Reading versus Temperature. 12.5% w/w FL7+™ Solution plus various dissolved Additives**

| **Additive** | | **LiBr** | **LiT** | **LiP** | **Urea** | **Urea** | **Urea + LiBr** | **NaCl** | **Na Fmt** | **none** |
|---|---|---|---|---|---|---|---|---|---|---|
| **Concentration % by weight** | | **20** | **20** | **20** | **20** | **39.1** | **39.1** | **20** | **20** | **- -** |
| **Temperature** | | | | | | | | | | |
| **°F** | **°C** | | | | | | | | | |
| 60 | 15.5 | >300 | 206 | 297 | 286 | 129 | 115 | >300 | >300 | >300 |
| 70 | 21.1 | >300 | 188 | 271 | 263 | 110 | 114 | >300 | >300 | >300 |
| 80 | 26.7 | 280 | 168 | 235 | 224 | 104 | 117 | >300 | 277 | 275 |
| 90 | 32.2 | 261 | 159 | 188 | 197 | 95 | 115 | >300 | 270 | 247 |
| 100 | 37.8 | 229 | 151 | 180 | 183 | 84 | 113 | >300 | 255 | 223 |
| 110 | 43.3 | 213 | 140 | 172 | 156 | 72 | 109 | 280 | 219 | 196 |
| 120 | 48.9 | 195 | 126 | 147 | 134 | 59 | 100 | 245 | 173 | 185 |
| 130 | 54.4 | 167 | 117 | 102 | 114 | 51 | 90 | 234 | 149 | 164 |
| 140 | 60.0 | 130 | 112 | 100 | 92 | 46 | 86 | 200 | 140 | 149 |
| 150 | 65.6 | 113 | 105 | 100 | 80 | 41 | 82 | 176 | 126 | 133 |
| 160 | 71.1 | 97 | 101 | 102 | 74 | 39 | 77 | 154 | 120 | 124 |

Of the solid additives, guanidinium thiocyanate was again the most effective at the 20 % by weight dose level. Of the anions tested thiocyanate appeared to be the most effective. Urea once again proved to be very effective when used at the higher dose of 39.1%.

### Example 4

### Effects of Breaker Fluid Composition on the Clean-Up of Filter-cakes on Formation Core Samples from BP Foinaven Field

This experiment was conducted using a specially designed core-flow test rig. The rig comprised a heated Hassler cell that has the capability to permeate fluids through a core plug (core sample) in either direction thereby representing flow directions from the well into the formation (injection) or from the formation into the well (production).

At one end of the cell is a chamber that represents a wellbore wherein formulated drilling fluids or breaker fluids can be pressurized onto an end face of the core plug under either static conditions or under conditions of shear (achieved by stirring the contents of the chamber).

### Test Procedure:

1. The Foinaven sandstone core plug was vacuum saturated in West of Shetland synthetic Formation Water before being mounted in a Viton sleeve.
2. The resulting assembly was loaded into the Hassler cell with a first pressure port positioned below the core plug, a second pressure port positioned approximately 20mm above the core face, and a third pressure port positioned in the wellbore end of the cell.
3. A confining pressure of 2500psi is then applied to the outside of the Viton sleeve.
4. The cell is then heated to the operating temperature (135 F).
5. The permeability of the core plug is measured in the production direction using oil at a constant rate (5 ml/min) until a stable permeability is obtained. The pressure downstream of the core was regulated to 150psi.
6. The permeability of the core plug in the injection direction is measured using synthetic N. Sea seawater at a constant rate until a stable permeability is obtained. The pressure downstream of the core was regulated to 150psi.
7. Oil was flowed in the production direction to fully re-saturate the core with oil.
8. Oil was removed from the chamber that represents the wellbore end of the core sample and was replaced with 350mls of drilling fluid containing polysaccharide-based water soluble polymers.
9. An overbalance pressure of 2238 psi was applied to the drilling fluid.
10. The end face of the core plus was exposed to the drilling fluid (mud) using the following exposure sequence: 4 hours dynamic at a stirring rate of 1500 rpm, followed by 16 hours static, followed by 1 hour dynamic at 1500 rpm. The pressure was reduced to 1830 psi for the static period.
11. The filtrate leak-off through the core plug was measured against time during the mud exposure sequence.
12. The cell was then opened and the liquid was carefully aspirated from the surface of the core / filter-cake, without disturbing the filter-cake.
13. Drilling fluid in the chamber at the "wellbore end" of the cell was then displaced to breaker fluid. An overbalance pressure of 1830 psi was applied and the breaker fluid was stirred at 500rpm for 10min, before being left under static conditions for 5 hours at 1830 psi.
14. The breaker fluid was then left to soak in the chamber for 3 days at balanced pressure.
15. After the end of the soak period, an attempt was made to inject seawater into the core plug.
16. Seawater injectivity was calculated as a percentage of the initial permeability to injected seawater.

### Drilling and Breaker Fluid Materials

Rheozan™ succinoglycan gum ex Rhodia.

FL7+ ™: a modified starch filtration reducer ex TBC Brinadd.

Safecarb 10 ™: a ground calcium carbonate ex M-I Swaco.

Melamine: powdered crystalline melamine ex DSM (Grade DSM 004).

Hymod Prima™: a ball clay ex IMERYS.

Arcasolve™, C55 enzyme, HT Starch Breaker, Xanthan Breaker and Acidgen™ FG, all obtained from Cleansorb Ltd.

A Drilling Fluid Formulation was prepared having the composition of Table 3 below for use in the Test Procedure:

**Table 5 ― Drilling Fluid Composition**

| | for 350 ml | for 1000 ml |
|---|---|---|
| Component | (g) | (g) |
| Deionised water | 293 | 837 |
| Sodium bromide | 110 | 314.3 |
| Rheozan™ | 1 | 2.9 |
| FL 7+ ™ | 4 | 11.4 |
| Safecarb 10 ™ | 10 | 28.6 |
| Melamine DSM 004 | 20 | 57.1 |
| pH ― natural pH from melamine | 8.3 | 8.3 |
| Simulated drill solids ― silica flour | 10 | 28.6 |
| Simulated drill solids ― Hymod Prima™ | 8 | 22.9 |

The results obtained using the Test Procedure with different breaker formulations and a control (no breaker fluid) are presented below.
1. When the Test Procedure was employed without using a breaker fluid by injecting seawater immediately after Step 12, the final seawater injectivity was 4%.
2. "Arcasolve™" Breaker Formulation for 350 ml:

| | |
|---|---|
| 1.19 SG brine solution base using NaCl + KCl + sodium Formate | 296 ml |
| Acidgen FG acid precursor | 41 g |
| C55 Enzyme to hydrolyze Acidgen FG | 4g |
| HT Starch Breaker Enzyme | 4g |
| Xanthan Breaker Enzyme | 4g |

When the "Arcasolve™" breaker formulation was used for Steps 13 to 14 of the Test Procedure, the final seawater injectivity was 2 %. This Example is a comparative test as the breaker formulation does not include a de-gelling agent. Thus, NaCl and KCl either do not act as de-gelling agents or may act by strengthening the polysaccharide-based polymer gels while sodium formate has a structuring effect and therefore increases the strength of the polysaccharide-based polymer gels.
3. When the Test Procedure was employed using a breaker fluid comprising a 35% by weight urea solution in seawater (65% by weight seawater), the final seawater injectivity was 27%. This injectivity was significantly higher than for the Arcasolve™ breaker formulation, indicating that urea is an effective de-gelling agent for Rheozan™ succinoglycan gum and FL7+ ™ modified starch filtration reducer. Thus, the urea solution has a good effect on removing the barrier to flow.
4. When the Test Procedure was carried out using a breaker fluid comprising a 35% by weight urea solution in seawater that additionally contained 1% by weight HT Starch Breaker enzyme and 1% by weight Xanthan Breaker Enzyme, the final seawater injectivity increased to 50%. This suggests that the urea de-gelling agent aids the action of the chain scission agents on the succinoglycan gum and modified starch (enzymes). It is also observed that the breaker fluid comprising urea and the two enzymes cleaned up the core plug significantly better than when these enzymes were included in the "Arcasolve™" breaker formulation.
5. When the test procedure was performed using a breaker fluid comprising 20% w/w Sodium Chloride solution and 5% w/w urea peroxide chain-scission agent, the final seawater injectivity was 20%.
6. When the Test Procedure was carried out using a breaker fluid comprising a 35% by weight urea solution in seawater that additionally contained 5% by weight of urea peroxide, the final seawater injectivity was 111%. Thus, the seawater injectivity was higher than when using the same amount of urea de-gelling agent (in the absence of a chain scission agent) or the same amount of urea peroxide chain scission agent (in the absence of urea de-gelling agent). This confirms the potentiating effect of urea on a peroxide chain scission agent.

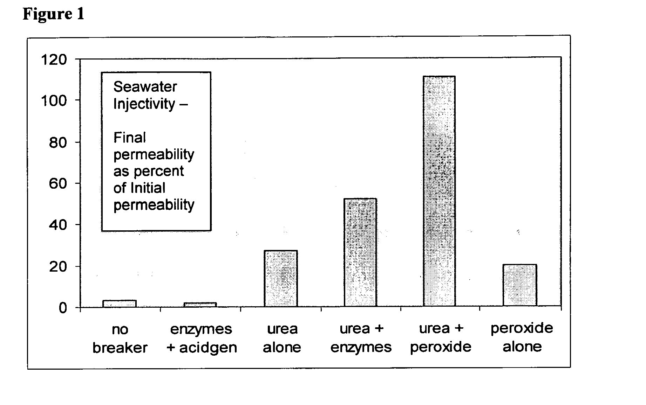

These results presented above are also represented in the form of a bar chart in Figure 1.

## Claims

1. A method of removing gelled water-soluble polysaccharide-based polymer residues from a well, the method comprising placing a breaker fluid in the well wherein the breaker fluid comprises a base fluid that is either
(a) a water-miscible or water-soluble organic liquid de-gelling agent selected from the group consisting of dimethylformamide (DMF); dimethylacetamide (DMAC); 1,3-dimethyl-3,4,5,6-tetrahydro-2(1H)-pyrimidinone (DMPU); 1 ,3-dimethyl-2-imidazolidinone (DMI); N-methylpyrrolidinone (NMP); butyrolactone; formamide; N-; N-methylformamide; dimethyl sulfoxide (DMSO); acetonitrile; propionitrile; sulfolane; N,N-dimethylpropionamide; tetramethylurea; hexamethylphosphoramide; ethylene glycol dimethyl ether; diethylene glycol dimethyl ether; 1,4 dioxane; tetrahydrofuran; N-methylmorpholine-N-oxide; trimethylamine N-oxide; and mixtures thereof; or
(b) a solution of at least one de-gelling agent in a liquid medium wherein the liquid medium is either aqueous or is a water-miscible or water-soluble organic liquid and the de-gelling agent is selected from the group consisting of:
(i) lithium chloride, lithium bromide; guanidinium chloride, and guanidinium bromide;
(ii) iodide salts of lithium, sodium, potassium, ammonium, magnesium, calcium and guanidinium;
(iii) nitrate salts of lithium, sodium, potassium, magnesium, calcium and guanidinium;
(iv) thiocyanate salts of lithium, sodium, potassium, ammonium, magnesium calcium and guanidinium;
(v) perchlorate salts of lithium, sodium, ammonium, magnesium, calcium and guanidinium;
(vi) salicylate salts of lithium, sodium, potassium, ammonium, magnesium, calcium and guanidinium;
(vii) trichloracetate and trifluoracetate salts of lithium, sodium, potassium, ammonium, magnesium, calcium and guanidinium;
(viii) urea, thiourea and methylacetamide, and
(ix) the water-miscible or water-soluble organic liquid de-gelling agents defined in (a), and the de-gelling agent(s) is present in the liquid medium in an amount of at least 10% by weight, preferably, at least 15% by weight, based on the total weight of the liquid medium and the de-gelling agent(s).

2. A method as claimed in claim 1 wherein the method comprises:
(A) an initial step of drilling, completing, or working-over the well or fracturing a rock formation that is penetrated by the well using an aqueous based wellbore fluid comprising at least one polysaccharide-based water-soluble polymer and at least one de-gelling agent as defined above wherein the de-gelling agent is present in the wellbore fluid in an amount of at least 5% by weight (based on the total weight of water and of de-gelling agent in the wellbore fluid) and wherein gelled polysaccharide-based polymer residues deposit in the well; and
(B) subsequently placing the breaker fluid in the well for a sufficient period of time to de-gel the gelled polysaccharide-based polymer residues whilst optionally increasing the pressure applied to the breaker fluid by up to 150 bar (2175 psi).

3. A method as claimed in Claim 2 wherein the method comprises the additional steps of:
(C) removing the breaker fluid together with at least a portion of the de-gelled polymer residues from the well; and
(D) either producing hydrocarbons from the well or injecting an injection fluid into the well.

4. A method as claimed in Claims 2 or 3 wherein:
in step (A), the gelled polysaccharide residues deposit in an interval of a production well proximate a hydrocarbon-bearing formation or in an interval of an injection well proximate a hydrocarbon-bearing formation and/or an underlying formation into which it is intended to inject a fluid;
in step (B), the breaker fluid is placed across the interval of the production well proximate the hydrocarbon-bearing formation or across the interval of the injection well proximate the hydrocarbon-bearing formation and/or the underlying formation; and
in step (D), hydrocarbons are produced from the hydrocarbon-bearing formation into the well or an injection fluid is injected from the well into the hydrocarbon formation and/or
the underlying formation.

5. A method as claimed in any one of Claims 2 to 4 wherein an aqueous wash fluid is circulated within the well to displace the breaker fluid and to remove any residual de-gelled polymer residues prior to either producing hydrocarbons from the well or injecting an injection into the well in Step (D).

6. A method as claimed in any one of the preceding claims wherein the gelled polymeric residues are contacted with the breaker fluid for at least 4 hours, preferably, at least 12 hours, for example, 1 to 3 days.

7. A method as claimed in any one of the preceding claims wherein the breaker fluid additionally comprises at least one polymer-chain-scission agent that is soluble or dispersible in the base fluid of the breaker fluid selected from the group consisting of enzymes which hydrolyse polysaccharide-based polymers, oxidizing agents, and acids.

8. A method as claimed in any one of preceding claims wherein the gelled water-soluble polysaccharide-based polymer residues are contained within a filter cake that has deposited from a wellbore fluid onto the walls of a wellbore or within a fracture in the wall of the wellbore wherein the filter cake additionally comprises acid soluble particulates and wherein an acid or acid precursor is added to the breaker fluid at a concentration of at least 5% by weight (based on the total weight of the breaker fluid) to dissolve the acid soluble particulates and wherein the acid precursor is a carboxylic acid ester or an orthoformate.

9. A method as claimed in Claim 8 wherein the breaker fluid additionally comprises a chelating agent selected from malonic acid, oxalic acid, succinic acid, ethylenediaminetetraacetic acid (EDTA), nitriloacetic acid (NTA), citric acid, hydroxyacetic acid, and salts thereof which hydrolyze to product efficient chelating compounds.

10. A breaker fluid comprising (1) a base fluid that is either
(A) a water-miscible or water-soluble organic liquid de-gelling agent selected from the group consisting of dimethylformamide (DMF); dimethylacetamide (DMAC); 1,3-dimethyl-3,4,5,6-tetrahydro-2(1H)-pyrimidinone (DMPU); 1 ,3-dimethyl-2-imidazolidinone (DMI); N-methylpyrrolidinone (NMP); butyrolactone; formamide; N-; N-methylformamide; dimethyl sulfoxide (DMSO); acetonitrile; propionitrile; sulfolane; N,N-dimethylpropionamide; tetramethylurea; hexamethylphosphoramide; ethylene glycol dimethyl ether; diethylene glycol dimethyl ether; 1,4 dioxane; tetrahydrofuran; N-methylmorpholine-N-oxide; trimethylamine N-oxide; and mixtures thereof; or
(B) a solution of at least one de-gelling agent in a liquid medium wherein the liquid medium is either aqueous or is a water-miscible or water-soluble organic liquid and the de-gelling agent is selected from the group consisting of:
(i) lithium chloride, lithium bromide; guanidinium chloride, and guanidinium bromide;
(ii) iodide salts of lithium, sodium, potassium, ammonium, magnesium, calcium and guanidinium;
(iii) nitrate salts of lithium, sodium, potassium, magnesium, calcium and guanidinium;
(iv) thiocyanate salts of lithium, sodium, potassium, ammonium, magnesium calcium and guanidinium;
(v) perchlorate salts of lithium, sodium, ammonium, magnesium, calcium and guanidinium;
(vi) salicylate salts of lithium, sodium, potassium, ammonium, magnesium, calcium and guanidinium;
(vii) trichloracetate and trifluoracetate salts of lithium, sodium, potassium, ammonium, magnesium, calcium and guanidinium;
(viii) urea, thiourea and methylacetamide, and
(ix) the water-miscible or water-soluble organic liquid de-gelling agents defined in (A), and the de-gelling agent(s) is present in the liquid medium in an amount of at least 10% by weight, preferably, at least 15% by weight, based on the total weight of the liquid medium and the de-gelling agent(s); and
(2) at least one polymer-chain-scission agent that is soluble or dispersible in the base fluid.

11. A breaker fluid as claimed in Claim 10 wherein the polymer-chain-scission agent(s) is soluble or dispersible in the base fluid of the breaker fluid and is selected from the group consisting of enzymes which hydrolyse polysaccharide-based polymers, oxidizing agents, and acids.

12. A breaker fluid as claimed in Claim 11 wherein the polymer-chain-scission agent(s) are selected from:
cellulose enzymes and amylase enzymes;
oxidising agents selected from peroxides (in particular, hydrogen peroxide, calcium peroxide, and urea peroxide), peracetic acid and its salts, persulfates (ammonium persulfate, sodium persulfate or potassium persulfate), perborates (in particular, sodium perborate), percarbonates (in particular, sodium percarbonate), perphosphates,
hypochlorites (in particular, sodium hypochlorite), and persilicates; and
strong or weak acids selected from hydrochloric acid, sulfamic acid or organic acids, in particular, aliphatic carboxylic acids having from 1 to 6 carbon atoms.

13. A breaker fluid as claimed in any one of Claims 11 to 12 that additionally comprises:
(a) an acid precursor wherein the acid precursor is a carboxylic acid esters; and
(b) an enzyme that accelerates the rate of hydrolysis of the carboxylic acid ester, wherein the carboxylic acid ester is present in the breaker fluid at a concentration of at least 1% by weight, in particular at least 5% by weight based on the total weight of the breaker fluid.

14. A breaker fluid as claimed in any one of Claims 11 to 13 that additionally comprises a chelating agent selected from malonic acid, oxalic acid, succinic acid, ethylenediaminetetraacetic acid (EDTA), nitrolotriacetic acid (NTA), citric acid, hydroxyacetic acid, and salts thereof which hydrolyze to product efficient chelating compounds.
